# EUROPÄISCHE PATENTSCHRIFT

(11) **EP 2 556 738 B1**
(45) Veröffentlichungstag und Bekanntmachung des Hinweises auf die Patenterteilung: **16.11.2016**
(21) Anmeldenummer: 12401166.9
(22) Anmeldetag: 08.08.2012
(51) Int. Cl.: A01B 79/00, A01C 17/00, A01C 21/00

(54) **Verfahren zur Steuerung eines Zentrifugaldüngerstreuers**
Method for controlling a centrifugal manure spreader
Procédé destiné à la commande d'un distributeur d'engrais centrifuge

(30) Priorität: 12.08.2011 DE 102011052632
(43) Veröffentlichungstag der Anmeldung: 13.02.2013
(73) Patentinhaber: Amazonen-Werke H. Dreyer GmbH & Co. KG, 49205 Hasbergen (DE)
(72) Erfinder: Rahe, Florian, 49504 Lotte (DE); Scheufler, Bernd, 49205 Hasbergen (DE)

(56) Entgegenhaltungen:
- EP-A2- 1 692 928
- DE-A1- 10 145 927
- DE-A1- 19 835 487
- DE-A1-102007 049 652

## Beschreibung

Die Erfindung betrifft ein Verfahren zur Steuerung eines Zentrifugaldüngerstreuers gemäß des Oberbegriffes des Patentanspruches 1.

Ein derartiges Verfahren ist in der DE 2007 049 652 A1 beschrieben. Beim Ausbringen von Mineraldünger mit einem Zentrifugaldüngerstreuer bei windigen Witterungsverhältnissen wird die gleichmäßige Düngerausbringung gestört. Für derartige Streubedingungen ist hier vorgesehen, dass die Umgebungsbedingungen, also auch die Windgeschwindigkeit und die Windrichtung bei der Einstellung und Steuerung des Zentrifugaldüngerstreuers berücksichtigt werden. In welcher Weise der Zentrifugaldüngerstreuers auf die Windrichtung und die Windgeschwindigkeit eingestellt wird, ist hier nicht zu entnehmen.

Der Erfindung liegt die Aufgabe zu Grunde, Einstellmaßnahmen für die Kompensation des Windeinflusses bei der Mineraldüngerverteilung durch einen Zentrifugaldüngerstreuers aufzuzeigen.

Diese Aufgabe wird erfindungsgemäß durch die Merkmale des Kennzeichens von Anspruch 1 gelöst.

Infolge dieser Maßnahmen werden aufgrund der von dem Sensor ermittelten Daten für die Windverhältnisse von dem Bordrechner die Einstelldaten des Zentrifugaldüngerstreuers zur Kompensation des Windeinflusses auf die Mineraldüngerverteilung berechnet. Anhand der Einstelldaten, die den Windeinfluss berücksichtigen, wird die vorgegebene Düngerverteilung erreicht. Somit entstehen keine Streufehler, die möglicherweise die zu Verunreinigungen von Gewässern führen. Weiterhin werden Streufehler vermieden, die zur Ertragsverlusten führen können. Die optimale Querverteilung des Düngers, auch bei schwierigen Windverhältnissen, führt zu einer verbesserten Bestandsführung und höheren Erträgen.

Durch die erfindungsgemäßen Maßnahmen kann auch noch bei schwierigen Windverhältnissen Dünger gestreut werden. Der Einsatzzeitraum des Zentrifugaldüngerstreuers wird erweitert und die Schlagkraft erhöht. Somit werden windbedingte Wartezeiten reduziert und der optimale Ausbringzeitpunkt kann erreicht werden.

Um auch bei sich ändernden Windverhältnissen eine optimale Düngerverteilung zu erreichen, ist vorgesehen, dass das Auswerteprogramm derart ausgelegt ist, dass entsprechend der ermittelten Windverhältnisse nach Windrichtung und Windgeschwindigkeit die Ansteuerung Aktoren der Dosierorgane und/oder Mittel zur Einstellung der Aufgabefläche des Mineraldüngers auf die jeweilige Schleuderscheibe und/oder die Antriebselemente der Schleuderscheiben derart erfolgt, das auch bei sich ändernden Windverhältnissen eine gleichmäßige und symmetrische Düngerverteilung, beigezogen auf die Mitte des Zentrifugaldüngerstreuers erreichbar ist.

Bei einem Düngerstreuer, bei dem die Drehzahl der Schleuderscheiben variabel einstellbar ist, ist vorgesehen, dass die Drehzahl der Schleuderscheibe, die die Wind zugewandte Seite bestreut durch Ansteuerung des Bordcomputers erhöht und die Drehzahl der Schleuderscheibe, die die Wind abgewandten Seite bestreut durch Ansteuerung des Bordcomputers reduziert wird.

Um eine besonders gute Düngerverteilung auch unter schwierigen Windverhältnissen zu erreichen, ist vorgesehen, dass zusätzlich zur Feinjustierung der Düngerverteilung in der vorgegebenen Weise die Aktoren der Dosierorgane und/oder Mittel zur Einstellung der Aufgabefläche des Mineraldüngers auf die jeweilige Schleuderscheibe von dem Bordcomputer in entsprechender Weise ansteuer-und einstellbar sind.

Um mit einem Zentrifugaldüngerstreuer gemäß dem vorstehenden Verfahren den Windeinfluss bei der Düngerausbringung zu kompensieren, ist vorgesehen, dass der Bordcomputer die Aktoren der Dosierorgane und/oder Mittel zur Einstellung der Aufgabefläche des Mineraldüngers auf die jeweilige Schleuderscheibe und/oder die Antriebselemente der Schleuderscheiben entsprechend der von dem Bordcomputer berechneten Einstelldaten angesteuert und eingestellt.

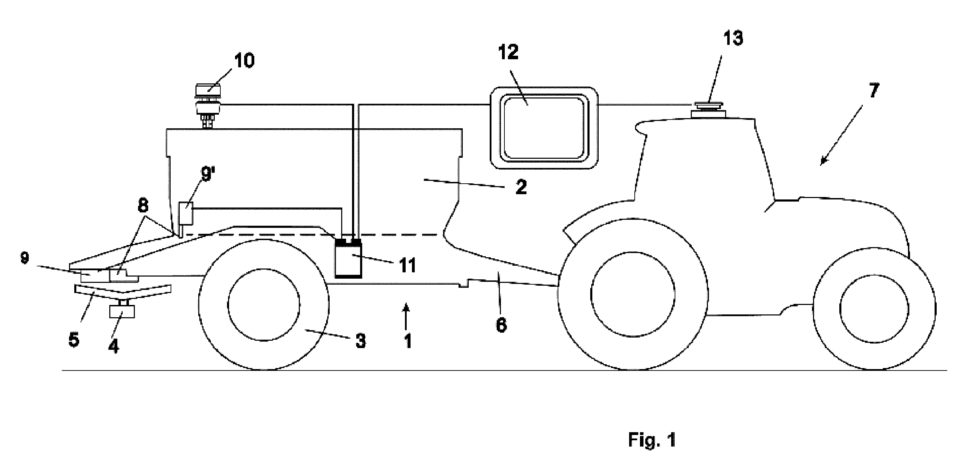

Weitere Einzelheiten der Erfindung sind der Beispielsbeschreibung und den Zeichnungen zu entnehmen. Hierbei zeigen
- Fig. 1: den an einen Ackerschlepper angekoppelten gezogenen Zentrifugaldüngerstreuers in Seitenansicht und Prinzipdarstellung,
- Fig. 2: ein Streubild ohne Seitenwindeinfluss,
- Fig. 3: die Darstellung von Streufächers eines Zentrifugaldüngerstreuers mit und ohne Seitenwindeinfluss,
- Fig. 4: ein Stoffdatenblatt,
- Fig. 5: ein Streubild mit Seitenwindeinfluss mit der Darstellung der Verschiebung der Einzelstreubilder im Vergleich zu einem Einzelstreubild ohne Seitenwindeinfluss,
- Fig. 6: die Darstellung der Veränderung der Wurfweite in Abhängigkeit der Scheibendrehzahl,
- Fig. 7: ein Streubild mit Seitenwindeinfluss und
- Fig. 8: schematische Darstellung der Algorithmen für die Einstellungen des Zentrifugaldüngerstreuers.

Der gezogene Zentrifugaldüngerstreuer 1 weist den Vorratsbehälter 2, das Fahrwerk 3, die beiden nebeneinander angeordneten und von den motorischen Antriebselementen 4 rotierend angetriebenen Schleuderscheiben 5 mit darauf angeordneten Wurfschaufeln auf. Der Zentrifugalduengerstreuer 1 ist über die Zugdeichsel 6 an einen Ackerschlepper 7 angekuppelt. Dem den Schleuderscheiben 5 wird über Dosierorgane 8, in denen Aktoren 9 und 9' zur Einstellung der Dosierorgane zugeordnet sind, in einstellbarer Weise zugeführt. Die Schleuderscheiben 5 werden mittels motorischer Antriebselemente 4 in veränderbarer Weise angetrieben. Über die Dosierorgane 8 ist in den Schleuderscheiben 5 in veränderbarer Weise die gewünschte Menge Materialdünger zu zuführen.

Dem Schleuderdüngerstreuer 1 ist in die Windmesseinrichtung 9' zugeordnet, welche Daten an den Bordcomputer 11 übermittelt. Der Bordcomputer 11 weist einen Anzeigebildschirm 12 auf. Dem Schlepper 7 ist eine GPS - Vorrichtung 13 zugeordnet. Über dem Bordcomputer 11 lassen sich die Aktoren 9 und 9' in der Dosierorgane 8 ansteuern.

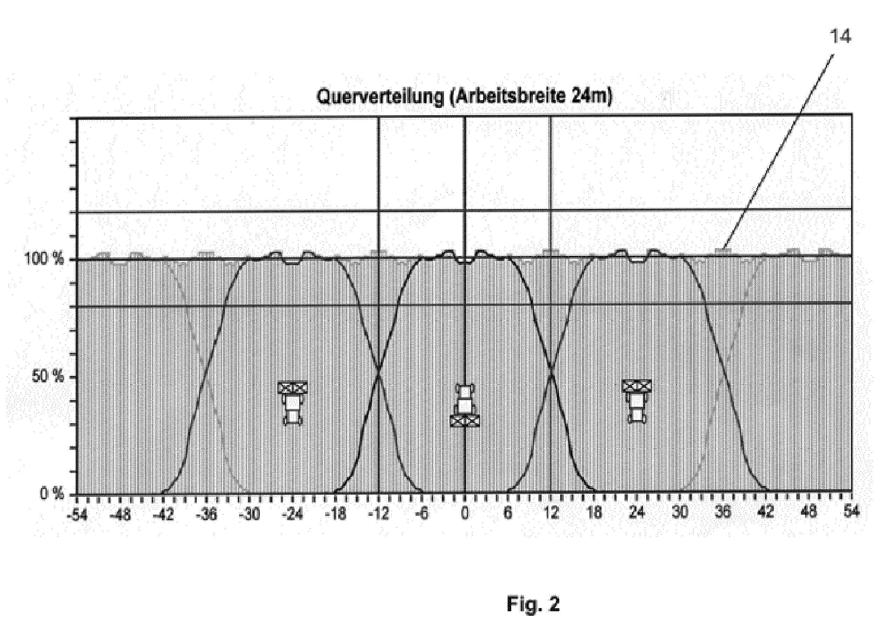

Mit der dem Zentrifugaldüngerstreuer 1 lässt sich das gemäß Fig. 2 dargestellte bekannte Streubild 14 ohne Seitenwind Einfluss, wenn kein Seitenwind beim Ausbringen des Mineraldüngers herrscht, erzeugen.

An dem Zentrifugaldüngerstreuer 1 ist die Wetterstation 9', die einen Windmesser 10 aufweist, zur Messung der Windverhältnisse nach Windrichtung und Windgeschwindigkeit angeordnet. Mittels dieser Windmesseinrichtung 9' werden die momentan wirkenden Windverhältnisse im Bereich des Streufächers erfasst. Diese Daten werden von der die Windmesseinrichtung aufweisenden Wetterstation 9' an einem Bordcomputer 11 übermittelt.

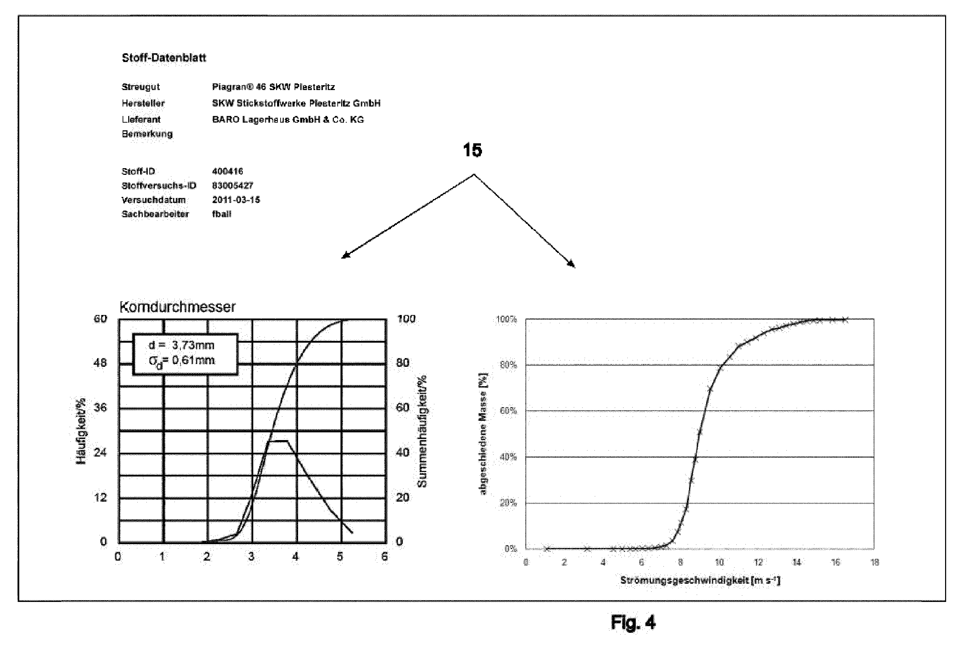

In dem Bordcomputer 11 sind die entsprechend in Fig. 4 die schematisch dargestellten Stoffdaten 15 über die Streueigenschaften mittels geeigneter Eingabevorrichtungen eingegeben. Die auf dem Stoffdatenblatt gemäß Fig. 4 enthaltenen Stoffdaten 15 werden im Labor ermittelt. Diese im Labor ermittelten verschiedenen Stoffeigenschaften der Düngersorten, die Einfluss auf das Flugverhalten haben, sowie bestimmten aerodynamischen Gleichungen lassen sich die Wurfparabeln bei Seitenwind berechnen. Weiterhin ist in dem Speicher des Bordcomputers 11 ein Auswerte- und/oder Steuerungsprogramm hinterlegt, mittels welchem unter Berücksichtigung der zugeführten Werte Einstellendaten für die Einstellung der Dosierorgane 8 und/oder Schleuderscheiben 5 ermittelt werden. Entsprechend der ermittelten Einstellendaten steuert der Bordcomputer 11 die Aktoren 9 und 9'der Dosierorgane 8 und/oder Mittel zur Einstellung der Aufgabefläche des Mineraldüngers auf die jeweilige Schleuderscheibe 5 und/oder die Antriebselemente 4 der Schleuderscheiben 5 an.

Dies ist erforderlich, weil, wie im Folgenden gezeigt wird, sich auf Grund von Seitenwindeinfluss die Ausbringung des Mineraldüngers auf der zu verteilenden Fläche entsprechend der Seitenwindverhältnisse ändert.

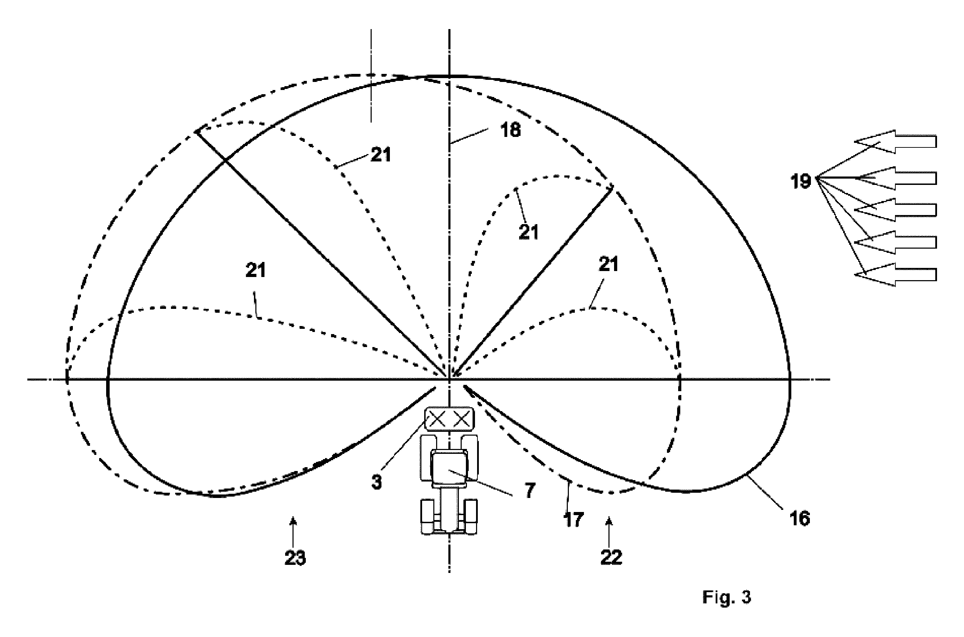

Die Fig. 3 zeigt in schematischer Weise einen Zentrifugaldüngerstreuers 1, der einen Ackerschlepper 7 angebaut ist, und die ohne und mit Seitenwindeinfluss entstehenden Streufächer 16 und 17. Mit durchzogenen Linien ist der aus den beiden sich überlappenden Streufächern sich ergebende hörnchenförmige Gesamtstreufächer ohne Seitenwindeinfluss dargestellt ist. Mit strichpunktierten Linien ist der aus den beiden sich überlappenden Streufächer sich ergebende hörnchenförmige Gesamtstreufächer 17 mit Seitenwindeinfluss dargestellt ist.

Wie die Fig. 3 anschaulich zeigt ist der entstehende Gesamtstreufächer 16 ohne Seitenwindeinfluss symmetrisch zur Mittelachse 18 des Zentrifugaldüngerstreuers 3, während der entstehende Gesamtstreufächer 17 mit Seitenwindeinfluss asymmetrisch und zur Mittelachse 18 des Streuers 3 in Seitenwindrichtung 19 verschoben ist.

Aus der Darstellung in Fig. 3 ist folgendes zu erkennen:

Die Düngerkörner bewegen sich nach Verlassen der Streuscheibe 5 auf parabelförmigen Wurfbahnen 20. Die Luft wirkt hierbei bremsend. Je höher die Relativgeschwindigkeit zwischen Düngerkorn und Luft ist, desto stärker ist die Bremswirkung, denn der Luftwiderstand nimmt mit V² zu. Für einen Streufächer, auf den ein Seitenwind 19 wirkt, bedeutet das:
1. Die Relativgeschwindigkeit der Düngerkörner die gegen den Wind geworfen werden, ist groß, die proportional zu V² wirkende Bremswirkung ist somit entsprechend hoch.
2. Die Relativgeschwindigkeit der Düngerkörner, die mit dem Wind geworfen werden, ist niedrig, der Mitnahmeeffekt ist entsprechend gering.

Diese beiden in Fig. 3 anhand der beiden Streufächer 16 und 17 dargestellten Effekte führen dazu, dass es keinen gleichförmigen Versatz gibt, sondern dass ein asymmetrisches Streubild 17 entsteht.

Auf der dem Seitenwind 19 zugewandten 22 Seite des Streufächers 17 ist ein Bereich der hohen Relativgeschwindigkeit zwischen Düngerkörnern und Seitenwind 19, während auf der dem Seitenwind 19 abgewandten Seite 23 des Streufächers 17 ein Bereich der niedrigen Relativgeschwindigkeit zwischen Düngerkörnern und Seitenwind ist.

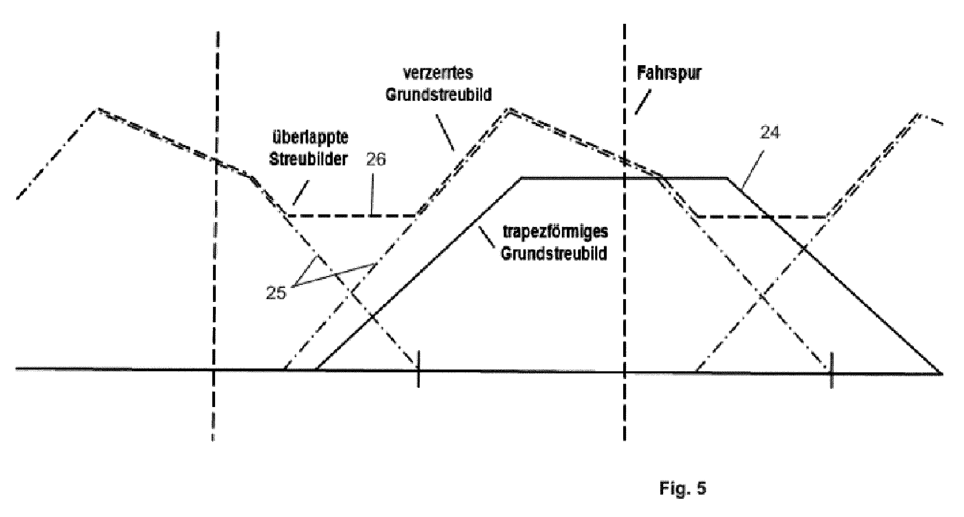

In Fig. 5 ist mit durchgezogenen Linien das trapezförmig im Grundstreubild 24, welches ohne Seitenwindeinfluss entsteht dargestellt. Mit strichpunktierten Linien ist das mit Seitenwindeinfluss entstehende Grundstreubild 25 dargestellt. Mit gestrichelten Linien sind die aus den verzerrten Grundstreubildern 25 durch Überlappung sich ergebenden überlappenden Streubilder, welche das Gesamtstreubild 26 mit Seitenwindeinfluss ergeben. Diese fahrgassenorientierte Überlappung des berechneten asymmetrischen Streufächers 25 ergibt das vor erwähnte verzehrte Streubild 26. Der Grad der Verzerrung hängt von der Windstärke sowie von bestimmten Stoffeigenschaften des Düngers ab. Hierbei ist zu berücksichtigen, als trapezförmige Grundstreubilder empfindlicher als dreieckförmige Grundstreubilder reagieren.

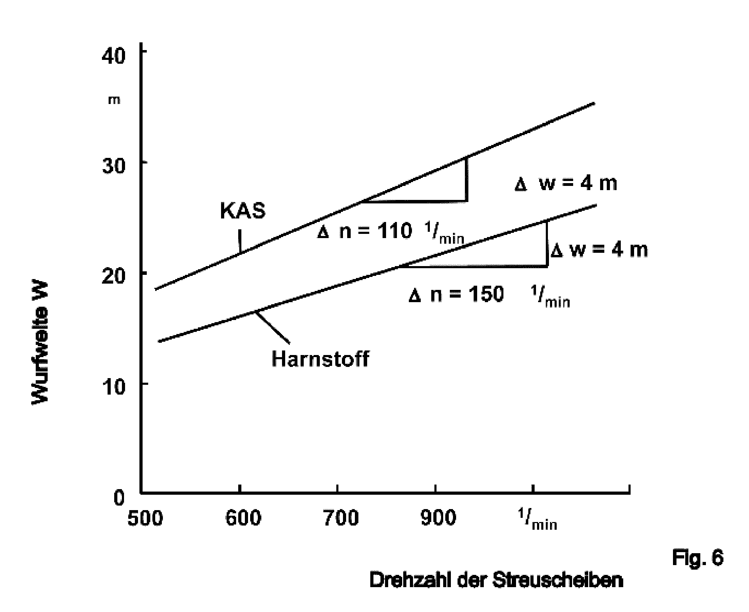

In Fig. 6 ist die Auswirkung der Änderung der Drehzahl des Streuscheiben auf die Veränderung der Wurfweite dargestellt. Die Wurfweite der Wurfparabel lässt sich beim mobilen Einsatz variieren, in dem die Abwurfgeschwindigkeiten der Düngerkörner durch Drehzahlveränderung der Schleuderscheiben vergrößert oder verkleinert wird. Die Darstellung in Fig. 6 zeigt die in der Streuerhalle gemessenen Verhältnisse bei verschiedenen Düngerarten (KAS und Harnstoff), die sich deutlich in den Streueigenschaften unterscheiden.

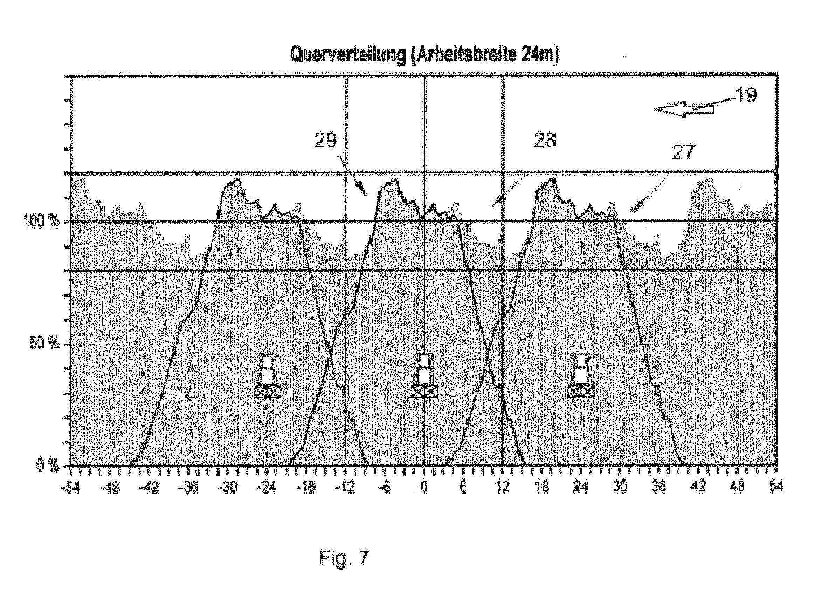

Das in Fig. 7 dargestellte Streubild 27 mit Seitenwindeinfluss 19 zeigt die Auswirkung des Seitenwindes auf das Streubild. Die gegen den Wind gerichtete Streuflanke 28 verkürzt sich um ca. 2 m bis 3 m, wohingegen die in den Wind gerichtete Streuflanke 29 nur um ca. 1,5 m bis 2 m verschoben wird. Eine Ähnlichkeit zwischen berechnetem und gemessenem verzerrtem Streubild ist erkennbar.

Durch entsprechende Korrekturmaßnahmen hinsichtlich der Drehzahl der Schleuderscheiben 5 und der Einstellung der Dosierorgane 8 und die Lage der Dosierorgane 8 zur Einstellung der Aufgabefläche des Düngers auf die jeweilige Schleuderscheibe 5 lässt sich der Seitenwindeinfluss kompensieren, so dass wieder das Streubild gemäß Fig. 2 entsteht. Diese Ansteuerung erfolgt über den Bordcomputer 11. In dem Bordcomputer 11 ist ein Auswerteprogramm hinterlegt, das derart ausgelegt ist, dass die Aktoren 9 und 9' der Dosierorgane 8 und/oder die Antriebselemente 4 der Schleuderscheiben 5 für die Verteilung des Mineraldüngers auf den Wind zugewandten Seite in Richtung Wurfweitenvergrößerung und die Aktoren 9 und 9' der Dosierorgane 8 und/oder der Antriebselemente 4 der Schleuderscheiben 5 für die Verteilung des Mineraldüngers auf der dem Wind abgewandten Seite in Richtung Wurfweitenverkleinerung eingestellt werden.

Hierbei ist das Auswerteprogramm derart ausgelegt, dass entsprechend der ermittelten Windverhältnisse nach Windrichtung und Windgeschwindigkeit die Ansteuerung der Aktoren 9 und 9' der Dosierorgane 8 und/oder die Antriebselemente 4 der Schleuderscheiben 5 derart erfolgt, das auch bei sich ändernden Windverhältnissen eine gleichmäßige und symmetrische Düngerverteilung, bezogen auf die Mitte des Zentrifugaldüngerstreuers 1 erreicht wird. Die Drehzahl der Schleuderscheibe 5, in die die dem Wind zugewandte Seite bestreuend wird durch die Ansteuerung des Bordcomputers 11 erhöht, und die Drehzahl der Schleuderscheibe 5, die die den Wind abgewandte Seite bestreut wird durch Ansteuerung des Bordcomputers 11 reduziert. Zusätzlich sind zur Feinjustierung der Düngerverteilung in der vorgegebenen Weise die Aktoren 9 und 9' der Dosierorgane 8 zur Einstellung der Aufgabefläche des Düngers auf der jeweiligen Schleuderscheibe 5 von dem Bordcomputer 11 in entsprechender Weise an steuer- und einstellbar sind. Hierbei sind die Aktoren 9 und 9' der beiden Dosierorgane 8 zur Einstellung der Aufgabefläche des Düngers auf den Schleuderscheiben 5 und/oder die Antriebselemente 4 der beiden Schleuderscheiben 5 unterschiedlich, und zwar in entgegengesetzter Richtung einstellbar. Mittels des Bordcomputers 11 werden die Aktoren 9 und 9' der Dosierorgane 8 und/oder die Antriebselemente 4 der Schleuderscheiben 5 entsprechend der von dem Bordcomputer 11 berechneten Einstelltdaten angesteuert und eingestellt.

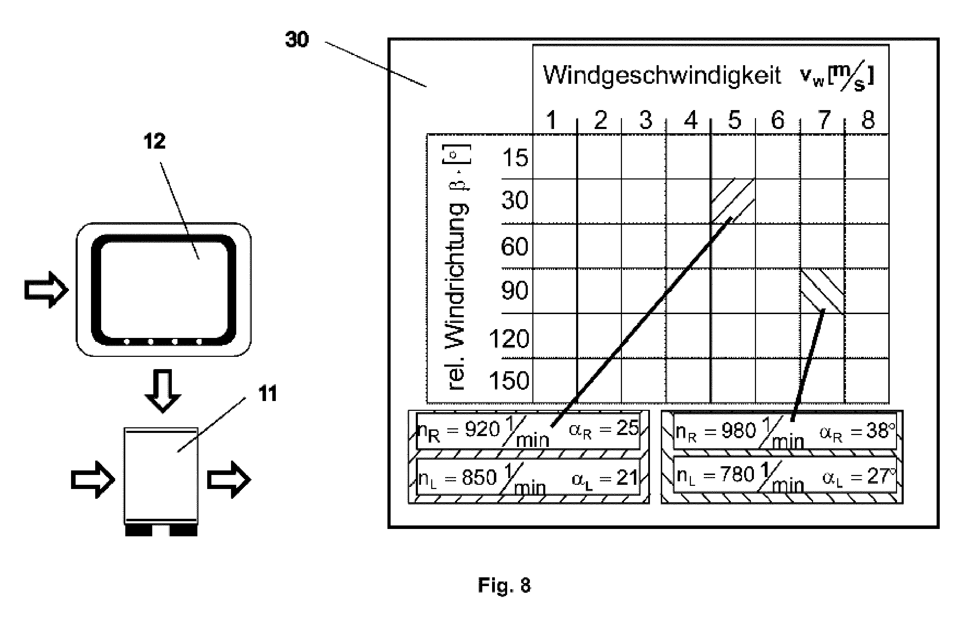

In Fig. 8 sind die Algorithmen für die Einstellungen des Düngerstreuers 1 dargestellt. Um das vom Wind verzerrte Streubild wieder auszugleichen, müssen die Drehzahl der Streuscheiben 5 unterschiedlich angepasst werden. Die Veränderung der Drehzahlen der Schleuderscheiben 5 führt allerdings dazu, dass sich die Beschleunigungsphase bzw. die Verweildauer der Düngerkörner auf den Streuerschaufeln der Schleuderscheiben 5 verändert. Es muss eine Feinkorrektur durch verdrehen der Aufgabefläche des Düngers auf den Streuscheiben 5 erfolgen. In dem Bordrechner 11 sind eine Vielzahl von Tabellen/Algorithmen 30 hinterlegt, wie in Fig. 8 dargestellt ist, so dass die automatische Kompensation des Seitenwindes erfolgen kann.

## Patentansprüche

1. Verfahren zur Steuerung eines Zentrifugaldüngerstreuers, bei dem Mineraldünger mit vorgebbarer Verteilung und verschiedenen Wurfweiten auf landwirtschaftlichen Flächen ausgebracht wird, wobei der Mineraldünger über mittels Aktoren einstellbare Dosierorgane aus einem Vorratsbehälter in einstellbaren Mengen in veränderbarer Weise mittels motorischen Antriebselementen rotierend angetriebenen und mit Wurfschaufeln besetzten Schleuderscheiben zugeführt wird, wobei mittels der über Aktoren ansteuerbaren Dosierorgane und den in veränderbarer Weise antreibbaren Schleuderscheiben die vorgegebene Verteilung und Wurfweite des zu verteilenden Mineraldüngers einstellbar sind, wobei die Ansteuerung der Aktoren der Dosierorgane und der Antriebselemente der Schleuderscheiben von einem Bordcomputer erfolgt, wobei dem Bordcomputer Daten über die Streueigenschaften, insbesondere physikalischen Eigenschaften des zu verteilenden Mineraldüngers und von zumindest einem an dem Zentrifugaldüngerstreuer angeordneten Sensor zur Ermittlung der tatsächlich vorherrschenden Windgeschwindigkeit und Windrichtung zugeführt werden, wobei in dem Speicher des Bordcomputers ein Auswerte- und/oder Steuerungsprogramm hinterlegt ist, mittels welchem unter Berücksichtigung der zugeführten Werte Einstelldaten für die Einstellung der Dosierorgane und/oder Schleuderscheiben ermittelt werden, wobei entsprechend der ermittelten Einstelldaten der Bordcomputer die Aktoren der Dosierorgane und/oder Mittel zur Einstellung der Aufgabefläche des Mineraldüngers auf die jeweilige Schleuderscheibe und/oder die Antriebselemente der Schleuderscheiben ansteuert, **dadurch gekennzeichnet, dass** das Auswerteprogramm derart ausgelegt ist, dass die Aktoren (9,9') der Dosierorgane und/oder Mittel (9) zur Einstellung der Aufgabefläche des Mineraldüngers auf die jeweilige Schleuderscheibe (5) und/oder die Antriebselemente (4) der Schleuderscheiben (5) für die Verteilung des Mineraldüngers auf der dem Wind zugewandten Seite in Richtung Wurfweitenvergrößerung und/oder die Aktoren der Dosierorgane und/oder Mittel zur Einstellung der Aufgabefläche des Mineraldüngers auf die jeweilige Schleuderscheibe (5) und/oder der Antriebselemente (4) der Schleuderscheiben (5) für die Verteilung des Mineraldüngers auf der dem Wind abgewandten Seite in Richtung Wurfweitenverkleinerung eingestellt werden, wobei die Aktoren (9,9') der beiden Dosierorgane (8) und/oder Mittel (9) zur Einstellung der Aufgabefläche des Mineraldüngers auf die jeweilige Schleuderscheibe (5) und/oder die Antriebselemente (4) der beiden Schleuderscheiben (5) in unterschiedlichen Beträgen und in entgegen gesetzter Richtung einstellbar sind.

2. Verfahren nach Anspruch 1, **dadurch gekennzeichnet, dass** das Auswerteprogramm derart ausgelegt ist, dass entsprechend der ermittelten Windverhältnisse nach Windrichtung und Windgeschwindigkeit die Ansteuerung Aktoren (9,9') der Dosierorgane und/oder Mittel (9) zur Einstellung der Aufgabefläche des Mineraldüngers auf die jeweilige Schleuderscheibe (5) und/oder die Antriebselemente (4) der Schleuderscheiben (5) derart erfolgt, das auch bei sich ändernden Windverhältnissen eine gleichmäßige und symmetrische Düngerverteilung, beigezogen auf die Mitte (18) des Zentrifugaldüngerstreuers (1) erreichbar ist.

3. Verfahren nach einem oder mehreren der vorstehenden Ansprüche, **dadurch gekennzeichnet, dass** die Drehzahl der Schleuderscheibe (5), die die Wind zugewandte Seite bestreut durch Ansteuerung des Bordcomputers (11) erhöht und die Drehzahl der Schleuderscheibe (5), die die Wind abgewandten Seite bestreut durch Ansteuerung des Bordcomputers (11) reduziert wird.

4. Verfahren nach Anspruch 3, **dadurch gekennzeichnet, dass** zusätzlich zur Feinjustierung der Düngerverteilung in der vorgegebenen Weise die Aktoren (9,9') der Dosierorgane (8) und/oder Mittel (9) zur Einstellung der Aufgabefläche des Mineraldüngers auf die jeweilige Schleuderscheibe (5) von dem Bordcomputer (11) in entsprechender Weise ansteuer- und einstellbar sind.

5. Zentrifugaldüngerstreuer zur Durchführung des Verfahrens nach einem oder mehreren der vorstehenden Ansprüche, **dadurch gekennzeichnet, dass** der Bordcomputer (11) die Aktoren (9,9') der Dosierorgane (8) und/oder Mittel (9) zur Einstellung der Aufgabefläche des Mineraldüngers auf die jeweilige Schleuderscheibe (5) und/oder die Antriebselemente (4) der Schleuderscheiben (5) entsprechend der von dem Bordcomputer (11) berechneten Einstelldaten ansteuern und einstellen kann.

## Claims

1. Method for controlling a centrifugal manure spreader, in which mineral manure is discharged onto agricultural areas with a preacquired distribution and with various throwing distances, wherein the mineral manure is fed in adjustable amounts in a variable fashion by means of centrifugal discs which are driven in rotation by means of motor-operated drive elements and are fitted with throwing blades, wherein the predefined distribution and throwing distance of the mineral manure which is to be distributed can be adjusted by means of the metering elements, which can be actuated using actuators, and the centrifugal discs which can be driven in a variable fashion, wherein the actuation of the actuators of the metering elements and of the drive elements of the centrifugal discs is carried out by an on-board computer, wherein data about the scattering properties, in particular physical properties of the mineral manure to be distributed are fed to the on-board computer from at least one sensor which is arranged on the centrifugal manure spreader and has the purpose of acquiring the actually prevailing wind speed and wind direction, wherein an evaluation and/or control program by means of which adjustment data for adjustment of the metering elements and/or centrifugal discs is acquired taking into account the values which are fed in is stored in the memory of the on-board computer, wherein the on-board computer actuates the actuators of the metering elements and/or means for adjusting the application area of the mineral manure to the respective centrifugal disc and/or the drive elements of the centrifugal discs in accordance with acquired adjustment data, **characterized in that** the evaluation program is configured in such a way that adjustment is carried out of the actuators (9, 9') of the metering elements and/or means (9) for adjusting the application area of the mineral manure to the respective centrifugal disc (5) and/or the drive elements (4) of the centrifugal discs (5) for the distribution of the mineral manure on the side facing the wind in the direction of increasing the throwing distance and/or of the actuators of the metering elements and/or means for adjusting the application area of the mineral manure to the respective centrifugal disc (5) and/or of the drive elements (4) of the centrifugal discs (5) for the distribution of the mineral manure on the side facing away from the wind in the direction of decreasing the throwing distance, wherein the actuators (9, 9') of the two metering elements (8) and/or means (9) for adjusting the application area of the mineral manure to the respective centrifugal disc (5) and/or the drive elements (4) of the two centrifugal discs (5) can be adjusted in differing amounts and in opposing directions.

2. Method according to Claim 1, **characterized in that** the evaluation program is configured in such a way that the actuation of the actuators (9, 9') of the metering elements and/or of the means (9) for adjusting the application area of the mineral manure to the respective centrifugal disc (5) and/or the drive elements (4) of the centrifugal discs (5) is carried out in accordance with the acquired wind conditions in terms of wind direction and wind speed in such a way that even in the case of changing wind conditions uniform and symmetrical distribution of manure can be achieved with respect to the centre (18) of the centrifugal manure spreader (1).

3. Method according to one or more of the preceding claims, **characterized in that** the rotational speed of the centrifugal disc (5), which scatters on the side facing the wind is increased by actuating the on-board computer (11) and the rotational speed of the centrifugal disc (5) which scatters on the side facing away from the wind are reduced by actuating the on-board computer (11).

4. Method according to Claim 3, **characterized in that**, in addition to the fine adjustment of the manure distribution in the predefined fashion, the actuators (9, 9') of the metering elements (8) and/or means (9) for adjusting the application area of the mineral manure to the respective centrifugal disc (5) can be actuated and adjusted in a corresponding fashion by the on-board computer (11).

5. Centrifugal manure spreader for carrying out the method according to one or more of the preceding claims, **characterized in that** the on-board computer (11) can actuate and adjust the actuators (9, 9') of the metering elements (8) and/or means (9) for adjusting the application area of the mineral manure to the respective centrifugal disc (5) and/or the drive elements (4) of the centrifugal discs (5) in accordance with the adjustment data calculated by the on-board computer (11).

## Revendications

1. Procédé de commande d'un distributeur d'engrais centrifuge, dans lequel de l'engrais minéral ayant une distribution pouvant être prédéterminée et des distances de projection différentes est répandu sur des surfaces agricoles, dans lequel l'engrais minéral est délivré par l'intermédiaire d'organes de dosage réglables au moyen d'actionneurs en provenance d'un réservoir en quantités réglables et par des méthodes modifiables au moyen de disques d'épandage entraînés en rotation au moyen d'éléments d'entraînement motorisés et occupés par des palettes d'éjection, dans lequel la distribution et la distance d'éjection prédéterminées de l'engrais minéral à répandre peuvent être réglées au moyen des organes de dosage pouvant être commandés par l'intermédiaire d'actionneurs et des disques d'épandage pouvant être entraînés par des méthodes différentes, dans lequel la commande des actionneurs des organes de dosage et des éléments d'entraînement des disques d'épandage est effectuée par un ordinateur de bord, dans lequel des données concernant les propriétés de distribution, notamment les propriétés physiques de l'engrais minéral à distribuer provenant d'au moins un capteur disposé sur le distributeur d'engrais centrifuge sont délivrées à l'ordinateur de bord pour obtenir la vitesse du vent et la direction du vent dominant effectif, dans lequel la mémoire de l'ordinateur de bord stocke un programme d'évaluation et/ou de commande au moyen duquel des données de réglage destinées au réglage des organes de dosage et/ou des disques d'épandage sont déterminées en tenant compte des valeurs délivrées, dans lequel l'ordinateur de bord commande, d'une manière qui correspond aux données de réglage déterminées, les actionneurs des organes de dosage et/ou des moyens destinés à régler la surface de déchargement de l'engrais minéral sur le disque d'épandage respectif et/ou les éléments d'entraînement respectifs des disque d'épandage, **caractérisé en ce que** le programme d'évaluation est conçu de manière à ce que les actionneurs (9, 9') des organes de dosage et/ou les moyens (9) destinés à régler la surface de déchargement de l'engrais minéral sur le disque d'épandage respectif (5) et/ou les éléments d'entraînement (4) des disques d'épandage (5) soient réglés pour distribuer l'engrais minéral du côté opposé au vent dans une direction augmentant la distance de projection et/ou à ce que les actionneurs des organes de dosage et/ou les moyens destinés à régler la surface de déchargement de l'engrais minéral sur les disques d'épandage respectifs (5) et/ou les éléments d'entraînement (4) des disques d'épandage (5) soient réglés pour distribuer l'engrais minéral du côté opposé au vent dans une direction conduisant à une diminution de la distance de projection, dans lequel les actionneurs (9, 9') des deux organes de dosage (8) et/ou les moyens (9) destinés à régler la surface de déchargement de l'engrais minéral sur les disques d'épandage respectifs (5) et/ou les éléments d'entraînement (4) des deux disques d'épandage (5) peuvent être réglés à des valeurs différentes et dans des directions opposées.

2. Procédé selon la revendication 1, **caractérisé en ce que** le programme d'évaluation est conçu de manière à ce que, d'une manière qui correspond aux caractéristiques déterminées du vent, en fonction de la direction du vent et de la vitesse du vent, la commande d'actionneurs (9, 9') des organes de dosage et/ou de moyens (9) destinés à régler la surface de déchargement de l'engrais minéral sur le disque d'épandage respectif (5) et/ou des éléments d'entraînement (4) des disques d'épandage (5), s'effectue de manière à ce qu'une distribution uniforme et symétrique de l'engrais, par rapport au milieu (18) du distributeur d'engrais centrifuge (1), puisse également être atteinte pour des caractéristiques variables du vent.

3. Procédé selon l'une ou plusieurs des revendications précédentes, **caractérisé en ce que** la vitesse de rotation du disque d'épandage (5) qui effectue la distribution du côté tourné vers le vent est augmentée par la commande effectuée par l'ordinateur de bord (11) et la vitesse de rotation du disque d'épandage (5) qui effectue la distribution du côté opposé au vent est réduite par la commande effectuée par l'ordinateur de bord (11).

4. Procédé selon la revendication 3, **caractérisé en ce qu'**en plus de l'ajustement précis de la distribution d'engrais conformément à la méthode prédéterminée, les actionneurs (9, 9') des organes de dosage (8), et/ou les moyens (9) destinés à régler la surface de déchargement de l'engrais minéral sur le disque d'épandage respectif (5) peuvent être commandés d'une manière correspondante et réglés par l'ordinateur de bord (11).

5. Distributeur d'engrais centrifuge destiné à mettre en oeuvre le procédé selon l'une ou plusieurs des revendications précédentes, **caractérisé en ce que** l'ordinateur de bord (11) peut commander et régler les actionneurs (9, 9') des organes de dosage (8) et/ou les moyens (9) destinés à régler la surface de déchargement de l'engrais minéral sur le disque d'épandage respectif (5) et/ou les éléments d'entraînement (4) des disques d'épandage (5) d'une manière qui correspond aux données de réglage calculées par l'ordinateur de bord (11).
